# EUROPEAN PATENT APPLICATION

(11) **EP 1 970 641 A1**
(43) Date of publication of application: **17.09.2008**
(21) Application number: 07701935.4
(22) Date of filing: 04.01.2007
(51) Int. Cl.: F24J 2/10

(54) **SOLAR ENERGY OPTICAL COLLECTION SYSTEM**

(30) Priority: 06.01.2006 CN 200620053536 U; 06.01.2006 CN 200620053533 U; 06.01.2006 CN 200620053534 U
(71) Applicant: Genius Electronic Optical (Xiamen) Co., Ltd, Xiamen, Fujian 361006 (CN)
(72) Inventor: ZHANG, Hongcheng, Fujian 361006 (CN); CHEN, Tianqing, Fujian 361006 (CN); CHEN, Tianshu, Fujian 361006 (CN); WANG, Shuiju, Fujian 361006 (CN)
(74) Representative: Chaillot, Geneviève
(86) International application number: PCT/CN2007/000003
(87) International publication number: WO 2007/079662

(57) **Abstract**

The invention discloses a solar energy collection system, in which a spherical reflector is installed in the optical path, whereof the spherical reflector is coated with reflection coating while an optical energy collector is installed at the optical path of reflection of the spherical reflector, thereby to constitute an optical system. As the optical collection system of the invention is constituted by a spherical reflector or non-spherical reflector combined with an optical energy collector, solar energy can be concentrated to the optical energy collector through the spherical reflector or the non-spherical reflector to achieve collection, whereof the spherical reflector or the non-spherical reflector are coated with reflection coating to reflect useful portion of the solar light to the optical energy collector and to completely absorb the useless but harmful portion which is further converted into useful energy.

## Description

### BACKGROUND OF THE INVENTION

### (a) Field of the Invention

The present invention is related to a common construction to accommodate dual electro-mechanical units arranged in parallel and indicating co-axial I/O, and more particularly to one designed for correcting the defective of the carrier with wheels on both sides respectively driven by an electro-mechanical unit that is comparatively heavier to cause greater impacts upon the wheels on either single side of the carrier when subject to force by having the present invention disposed at where between wheels from both sides of the carrier.

### (b) Description of the Prior Art:

Energy shortage has become a global problem nowadays. According to estimation by experts, the existing available energy sources on earth such as coal and natural gas, etc if based on the present energy demands can only provide about 50 years of use. Therefore, exploiting energy sources other than earth such as effectively utilizing and converting the solar energy to controllable energy source has become a difficult problem which different fields of experts are trying to solve.

### SUMMARY OF THE INVENTION

The purpose of the invention is to provide a solar energy collecting system which collects solar energy through an optical system.

To realize the above purpose, the resolution provided by the invention is : a solar energy collecting system, whereof a spherical reflector with reflection coating is installed in the optical path while an optical energy collector is installed in the reflection optical path of the spherical reflector whereby to constitute an optical system.

A non-spherical calibrating lens is further installed at the most front position of the optical system.

The said non-spherical calibrating lens is coated with anti-reflection coating.

An optical energy collector is installed in front of the spherical reflector.

The said flat reflector is installed at 45°inclination to the optical axis in front of the said spherical reflector and an optical energy collector is installed at the optical path below the said flat reflector.

A solar energy collection system, in which a non-spherical reflector is installed in the optical path, whereof the non-spherical reflector is coated with reflection coating while an optical energy collector is installed at the optical path of reflection of the non-spherical reflector, thereby to constitute an optical system.

A non-spherical calibrating lens is further installed at the most front position on the optical path of the optical system.

The said spherical calibrating lens is coated with anti-reflection coating.

An optical energy collector is installed in front of the spherical reflector.

A flat reflector is installed at 45°inclination to the optical axis in front of the said non-spherical reflector while an optical energy collector is installed at the optical path below the said flat reflector.

A solar energy collection system, in which two face to face spherical reflectors are installed in the optical path, whereof the two spherical reflectors are coated with reflection coating, whereof the small spherical reflector is installed in front of the spherical reflector while the spherical reflector has a center through hole to let the reflection ray of the small spherical reflector pass and an optical energy collector is installed behind the spherical reflector corresponding to the through hole location, thereby to constitute an optical system.

A non-spherical calibrating lens is installed at the most front position on the optical path of the optical system.

The said non-spherical calibrating lens is coated with anti-reflection coating.

A solar energy collection system, in which two face to face non-spherical reflectors are installed in the optical path, whereof the two non-spherical reflectors are coated with reflection coating, whereof the small non-spherical reflector is installed in front of the non-spherical reflector while the non-spherical reflector has a center through hole to let the reflection ray of the small non-spherical reflector pass and an optical energy collector is installed behind the non-spherical reflector corresponding to the through hole location, thereby to constitute an optical system.

A non-spherical calibrating lens is installed at the most front position on the optical path of the optical system.

The said non-spherical calibrating lens is coated with anti-reflection coating.

A solar energy collection system, in which two face to face spherical reflector and non-spherical reflector are installed in the optical path, whereof the spherical reflector and the non-spherical reflector are coated with reflection coating, whereof the small spherical reflector or small non-spherical reflector is installed in front of the non-spherical reflector or the spherical reflector while the non-spherical reflector or spherical reflector has a center through hole to let the reflection ray of the small spherical reflector or the non-spherical reflector pass and an optical energy collector is installed behind the non-spherical reflector or the spherical reflector corresponding to the through hole location, thereby to constitute an optical system.

A non-spherical calibrating lens is installed at the most front position on the optical path of the optical system.

The said non-spherical calibrating lens is coated with anti-reflection coating.

By adopting the above said methods, as the optical collection system of the invention is constituted by a spherical reflector or non-spherical reflector combined with an optical energy collector, solar energy can be concentrated to the optical energy collector through the spherical reflector or the non-spherical reflector to achieve collection. At the same time, the spherical reflector or the non-spherical reflector are coated with reflection coating, through the said coating , useful portion of the solar light is reflected to optical energy collector while the useless but harmful portion (such as ultraviolet light of wavelength below 400 nano-meters) are completely absorbed and further converted into useful energy

### BRIEF DESCRIPTION OF THE DRAWINGS

Figure 1 is the structure schematic drawing of embodying example 1 of the invention (Optical path diagram);
Figure 2 is the curve diagram of chromatic aberration vs. spherical aberration of embodying example 1 of the invention;
Figure 3 is the point array diagram of embodying example 1 of the invention;
Figure 4 is the structure schematic drawing of embodying example 2 of the invention (Optical path diagram);
Figure 5 is the curve diagram of chromatic aberration vs. spherical aberration of embodying example 2 of the invention;
Figure 6 is the point array diagram of embodying example 2 of the invention;
Figure 7 is the structure schematic drawing of embodying example 3 of the invention (Optical path diagram);
Figure 8 is the curve diagram of chromatic aberration vs. spherical aberration of embodying example 3 of the invention;
Figure 9 is the point array diagram of embodying example 3 of the invention;
Figure 10 is the structure schematic drawing of embodying example 4 of the invention (Optical path diagram);
Figure 11 is the curve diagram of chromatic aberration vs. spherical aberration of embodying example 4 of the invention;
Figure 12 is the point array diagram of embodying example 4 of the invention;
Figure 13 is the structure schematic drawing of embodying example 5 of the invention (Optical path diagram);
Figure 14 is the curve diagram of chromatic aberration vs. spherical aberration of embodying example 5 of the invention;
Figure 15 is the point array diagram of embodying example 5 of the invention;
Figure 16 is the structure schematic drawing of embodying example 6 of the invention (Optical path diagram);
Figure 17 is the curve diagram of chromatic aberration vs. spherical aberration of embodying example 6 of the invention;
Figure 18 is the point array diagram of embodying example 6 of the invention;
Figure 19 is the structure schematic drawing of embodying example 7 of the invention (Optical path diagram);
Figure 20 is the curve diagram of chromatic aberration vs. spherical aberration of embodying example 7 of the invention;
Figure 21 is the point array diagram of embodying example 7 of the invention;
Figure 22 is the structure schematic drawing of embodying example 8 of the invention (Optical path diagram);
Figure 23 is the curve diagram of chromatic aberration vs. spherical aberration of embodying example 8 of the invention;
Figure 24 is the point array diagram of embodying example 8 of the invention;
Figure 25 is the structure schematic drawing of embodying example 9 of the invention (Optical path diagram);
Figure 26 is the curve diagram of chromatic aberration vs. spherical aberration of embodying example 9 of the invention;
Figure 27 is the point array diagram of embodying example 9 of the invention;
Figure 28 is the structure schematic drawing of embodying example 10 of the invention (Optical path diagram);
Figure 29 is the curve diagram of chromatic aberration vs. spherical aberration of embodying example 10 of the invention;
Figure 30 is the point array diagram of embodying example 10 of the invention;
Figure 31 is the structure schematic drawing of embodying example 11 of the invention (Optical path diagram);
Figure 32 is the curve diagram of chromatic aberration vs. spherical aberration of embodying example 11 of the invention;
Figure 33 is the point array diagram of embodying example 11 of the invention;
Figure 34 is the structure schematic drawing of embodying example 12 of the invention (Optical path diagram);
Figure 35 is the curve diagram of chromatic aberration vs. spherical aberration of embodying example 12 of the invention;
Figure 36 is the point array diagram of embodying example 12 of the invention;

### DETAILED DESCRIPTION OF THE PREFERRED EMBODIMENTS

A few concepts of parameters in optical design shall be delineated first before describing the embodiments:
Aberration : It refers to the deviation between the actual image and the ideal image of a geometric shape, whereof it is generated due to characteristics of the lens material or surface of refraction (or reflection).
Ideal image: It is a image formed by an ideal optical system. In the actual optical system, the image formation space and aperture of light ray is in fix size, at the same time since the image forming light rays is composed of different light wavelengths while the index of refraction varies by wavelengths. Therefore the actual formed image has a series of defects which are the aberration.
Spherical aberration : The concentric rays emitted from the point of axis are refracted by the respective refractor surface of the optical system, whereof the rays at different aperture angle focus to different points and result in different deviations from the ideal image location that is called spherical aberration. Its value is shown by the difference between the image distance of the different aperture angles of rays after passing the system and the near axis object distance, whereof the smaller spherical aberration leads to better energy uniformity. Therefore, if the ray points strike on the chip uniformly, it is good for energy collection.
Chromatic aberration: Images of most optical systems are formed by white light which is combined by different wavelengths(color) of single color lights. The optical material has different refraction index corresponding to different wavelengths of color lights, while after refracted by the first surface of the optical system, the color lights in the white light are separated and individually transmitted in their own paths of the optical system, thereby to cause differences in locations and sizes of formed images among the color lights that appear like a color dispersion diagram on the image plane. In case of plural color lights formation, the aberration generated by the different color lights is called chromatic aberration, whereof the smaller chromatic aberration value leads to better energy collection.
Point array diagram: The optical design requires that the optical system aberration be corrected. However, as it is impossible nor necessary to correct aberrations to complete perfection, a best correction method shall be selected, so is the extent of correction in order to meet use requirement, i.e. to tolerance of aberration shall be decided.

The rays emitted from one point after passing through the optical system, whose image intersection points no longer focus to the same point due to aberrations, but form a dispersion diagram in a certain range area which is called point array diagram. The density of center points in the point array diagram can be used to evaluate the quality of the image forming system. If the point concentration and density are higher, so is the better energy concentration effect.

### Embodied example 1:

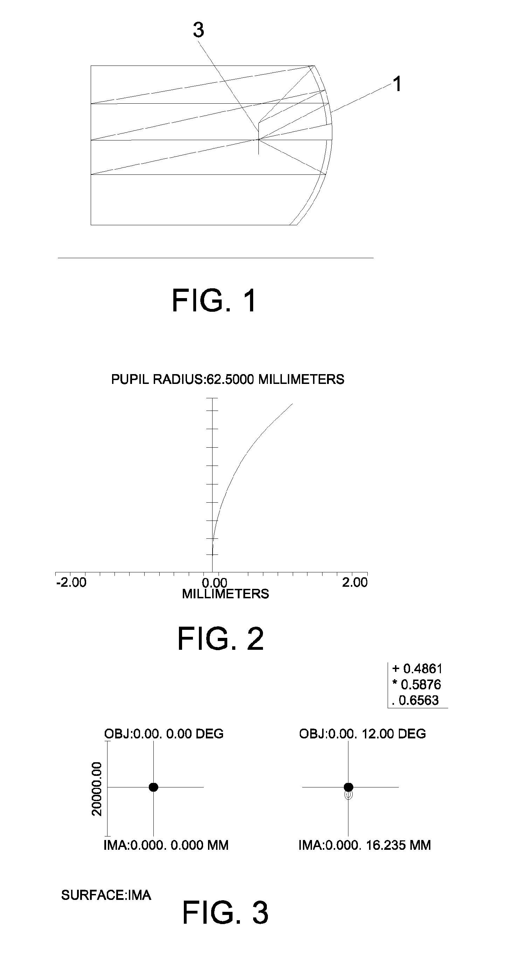

The solar energy collection structure of the invention as shown in figure 1-3 which is mainly comprised of a spherical reflector 1 (or non-spherical reflector 1) and an optical energy collector 3, whereof the spherical reflector 1 (or non-spherical reflector 1) is coated with reflection coating, through the said coating , useful portion of the solar light is reflected to optical energy collector 3 while the useless but harmful portion (such as ultraviolet light of wavelength below 400 nano-meters) are completely absorbed. The spherical reflector 1 (or non-spherical reflector 1) is installed in the solar optical path while the optical energy collector 3 is installed at the optical axis in front of the spherical reflector 1 (or non-spherical reflector 1), thereby to constitute an optical system.

The chromatic aberration formed by the optical system of such structure is 0, while the maximum spherical aberration is 2.46. Figure 2 shows the curve diagram of the chromatic aberration vs. spherical aberration. Figure 3 shows the point array diagram formed by this optical system.

### Embodying example 2:

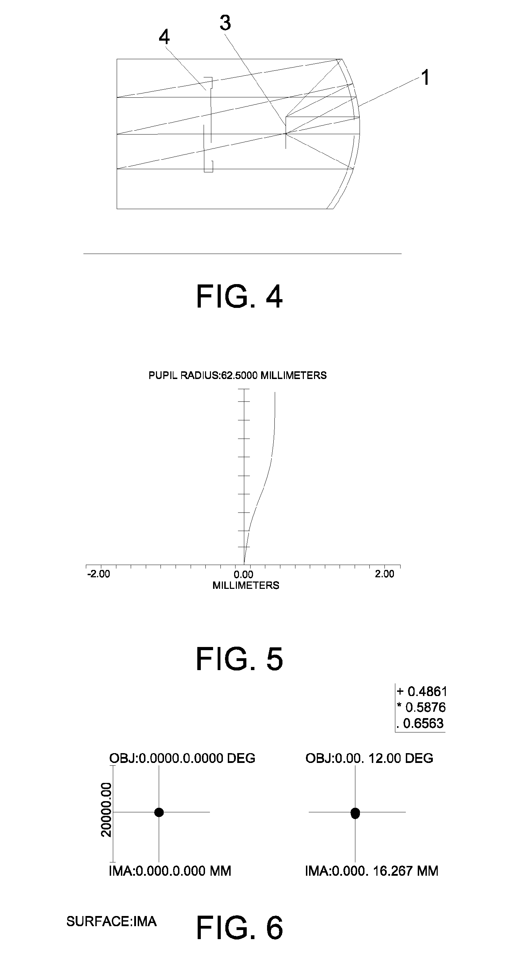

The solar energy collection structure of the invention as shown in figure 4-6 which is mainly comprised of a spherical reflector 1, an optical energy collector 3 and a non-spherical calibrating lens 4, whereof the spherical reflector 1 is coated with reflection coating. The spherical reflector 1 is installed in the solar optical path while the optical energy collector 3 is installed at the optical axis in front of the spherical reflector 1 thereby to constitute an optical system and a non-spherical calibrating lens 4 is further installed at the most front position on the optical axis, the said non-spherical calibrating lens 4 is coated with anti-reflection coating.

The chromatic aberration formed by the optical system of such structure is 0.023, while the maximum spherical aberration is 1. Figure 5 shows the curve diagram of the chromatic aberration vs. spherical aberration. Figure 6 shows the point array diagram formed by this optical system.

### Embodying example 3:

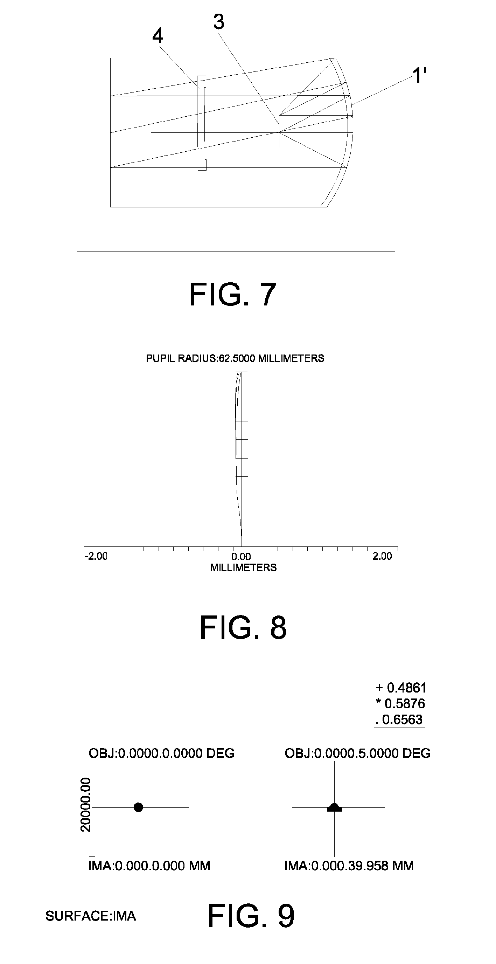

The solar energy collection structure of the invention as shown in figure 7-9 which is mainly comprised of a spherical reflector 1', optical energy collector 3 and a non-spherical calibrating lens 4, whereof the non-spherical reflector 1' is coated with reflection coating. The non-spherical reflector 1 is installed in the solar optical path while the optical energy collector 3 is installed at the optical axis in front of the non-spherical reflector 1' thereby to constitute an optical system and a non-spherical calibrating lens 4 is further installed at the most front position, the said non-spherical calibrating lens 4 is coated with anti-reflection coating.

The chromatic aberration formed by the optical system of such structure is -0.048, while the maximum spherical aberration is 0.026. Figure 8 shows the curve diagram of the chromatic aberration vs. spherical aberration. Figure 9 shows the point array diagram formed by this optical system.

### Embodying example 4:

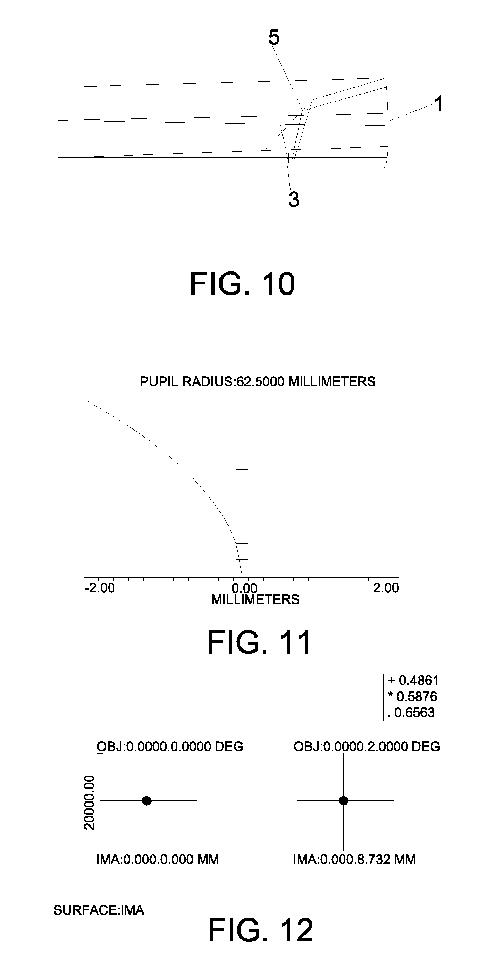

The solar energy collection structure of the invention as shown in figure 10-12 which is mainly comprised of a spherical reflector 1, a flat reflector 5 and an optical energy collector 3, whereof the spherical reflector 1 and flat reflector 5 are coated with reflection coating, through the said coating , useful portion of the solar light is reflected to optical energy collector 3 while the useless but harmful portion (such as ultraviolet light of wavelength below 400 nano-meters) are completely absorbed. The spherical reflector 1 is installed in the solar optical path while the flat reflector 5 is installed at 45°inclination to the optical axis in front of the spherical reflector 1 and the optical energy collector 3 is installed at the optical path below the flat reflector 5.

The chromatic aberration formed by the optical system of such structure is 0, while the maximum spherical aberration is -1.98. Figure 11 shows the curve diagram of the chromatic aberration vs. spherical aberration. Figure 12 shows the point array diagram formed by this optical system.

### Embodying example 5:

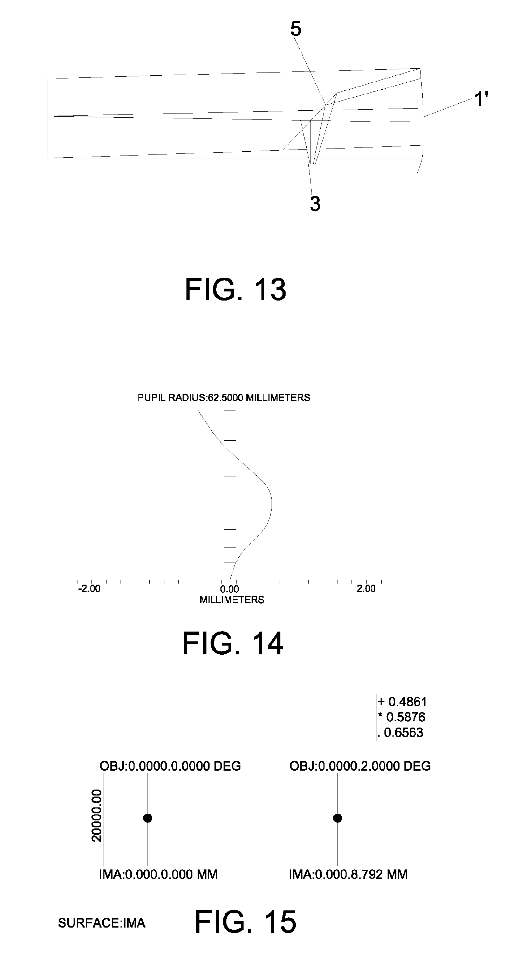

The solar energy collection structure of the invention as shown in figure 13-15 which is mainly comprised of a non-spherical reflector 1', a flat reflector 5 and an optical energy collector 3, whereof the non-spherical reflector 1' and flat reflector 5 are coated with reflection coating, through the said coating , useful portion of the solar light is reflected to optical energy collector 3 while the useless but harmful portion (such as ultraviolet light of wavelength below 400 nano-meters) are completely absorbed. The non-spherical reflector 1' is installed in the solar optical path while the flat reflector 5 is installed at 45° inclination to the optical axis in front of the non-spherical reflector 1' and the optical energy collector 3 is installed at the optical path below the flat reflector 5.

The chromatic aberration formed by the optical system of such structure is 0, while the maximum spherical aberration is 0.567. Figure 14 shows the curve diagram of the chromatic aberration vs. spherical aberration. Figure 15 shows the point array diagram formed by this optical system.

### Embodying example 6:

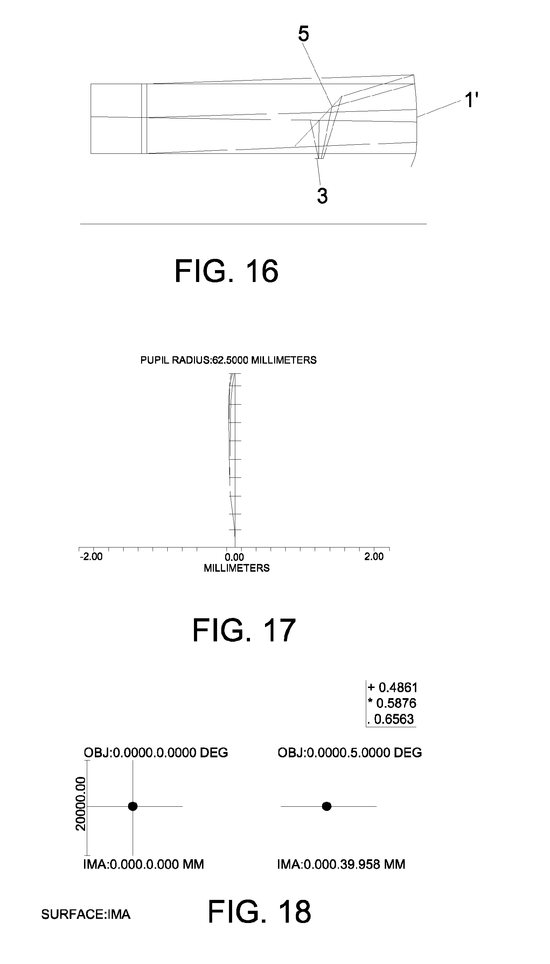

The solar energy collection structure of the invention as shown in figure 16-18 which is mainly comprised of a non-spherical reflector 1', a flat reflector 5, an optical energy collector 3, and a non-spherical calibrating lens 4, whereof the non-spherical reflector 1' and flat reflector 5 are coated with reflection coating. The non-spherical reflector 1' is installed in the solar optical path while the flat reflector 5 is installed at 45 inclination to the optical axis in front of the non-spherical reflector 1' and the optical energy collector 3 is installed at the optical path below the flat reflector 5. Further, a non-spherical calibrating lens 4 is installed at the optical path behind flat reflector 5, whereof the said non-spherical calibrating lens 4 is coated with anti-reflection coating.

The chromatic aberration formed by the optical system of such structure is 0.03, while the maximum spherical aberration is -0.07. Figure 17 shows the curve diagram of the chromatic aberration vs. spherical aberration. Figure 18 shows the point array diagram formed by this optical system.

### Embodying example 7:

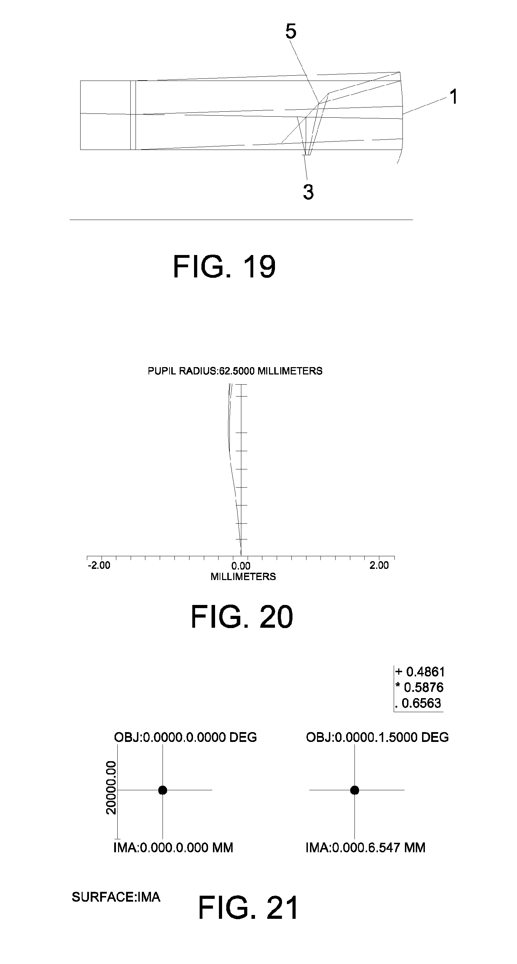

The solar energy collection structure of the invention as shown in figure 19-21 which is mainly comprised of a spherical reflector 1, a flat reflector 5, an optical energy collector 3, and a non-spherical calibrating lens 4, whereof the spherical reflector 1 and flat reflector 5 are coated with reflection coating. The spherical reflector 1 is installed in the solar optical path while the flat reflector 5 is installed at 45°inclination to the optical axis in front of the spherical reflector 1 and the optical energy collector 3 is installed at the optical path below the flat reflector 5. Further, a non-spherical calibrating lens 4 is installed at the optical path behind flat reflector 5, whereof the said non-spherical calibrating lens 4 is coated with anti-reflection coating.

The chromatic aberration formed by the optical system of such structure is 0.03, while the maximum spherical aberration is -0.11. Figure 20 shows the curve diagram of the chromatic aberration vs. spherical aberration. Figure 21 shows the point array diagram formed by this optical system.

### Embodying example 8:

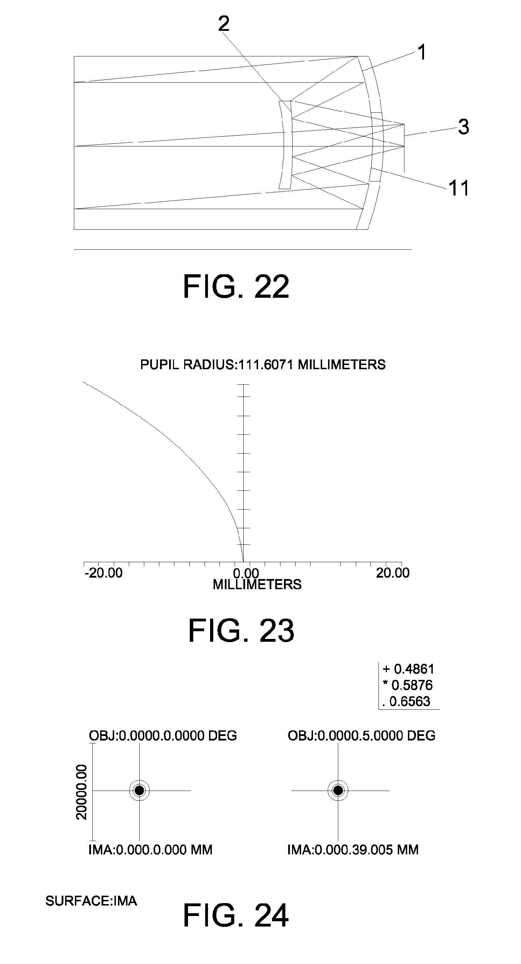

The solar energy collection structure of the invention as shown in figure 22-24 which is mainly comprised of a spherical reflector 1, a small spherical reflector 2 and an optical energy collector 3, whereof the spherical reflector 1 and the small spherical reflector 2 are coated with reflection coating, through the said coating , useful portion of the solar light is reflected to optical energy collector 3 while the useless but harmful portion (such as ultraviolet light of wavelength below 400 nano-meters) are completely absorbed. The large and small spherical reflectors 1 & 2 are installed in the solar optical path, whereof the small spherical reflector 2 is installed in front of the spherical reflector 1 while the spherical reflector 1 has a center through hole 11 to let reflection ray pass, and an optical energy collector 3 is installed behind the spherical reflector 1 corresponding to the through hole 11 location, thereby to constitute an optical system.

The chromatic aberration formed by the optical system of such structure is -0, while the maximum spherical aberration is -10.83. Figure 23 shows the curve diagram of the chromatic aberration vs. spherical aberration. Figure 24 shows the point array diagram formed by this optical system.

### Embodying example 9:

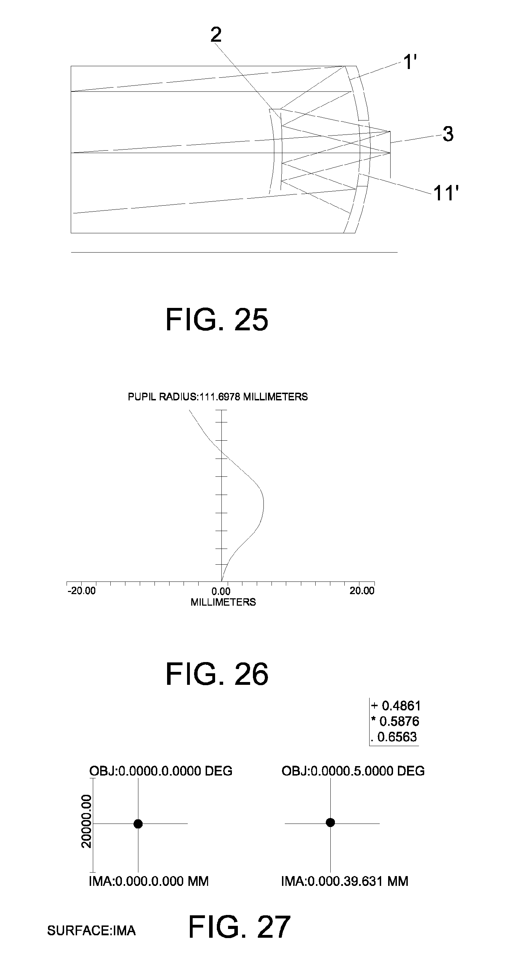

The solar energy collection structure of the invention as shown in figure 25-27 which is mainly comprised of a non-spherical reflector 1', a small spherical reflector 2 and an optical energy collector 3, whereof the non-spherical reflector 1' and the small spherical reflector 2 are coated with reflection coating, through the said coating , useful portion of the solar light is reflected to optical energy collector 3 while the useless but harmful portion (such as ultraviolet light of wavelength below 400 nano-meters) are completely absorbed. The non-spherical reflector 1' and small spherical reflector 2 are installed in the solar optical path, whereof the small spherical reflector 2 is installed in front of the non-spherical reflector 1' while the non-spherical reflector 1' has a center through hole 11 to let reflection ray pass, and an optical energy collector 3 is installed behind the spherical reflector 1 corresponding to the through hole 11 location, thereby to constitute an optical system.

The chromatic aberration formed by the optical system of such structure is -0, while the maximum spherical aberration is -3.10. Figure 26 shows the curve diagram of the chromatic aberration vs. spherical aberration. Figure 27 shows the point array diagram formed by this optical system.

### Embodying example 10:

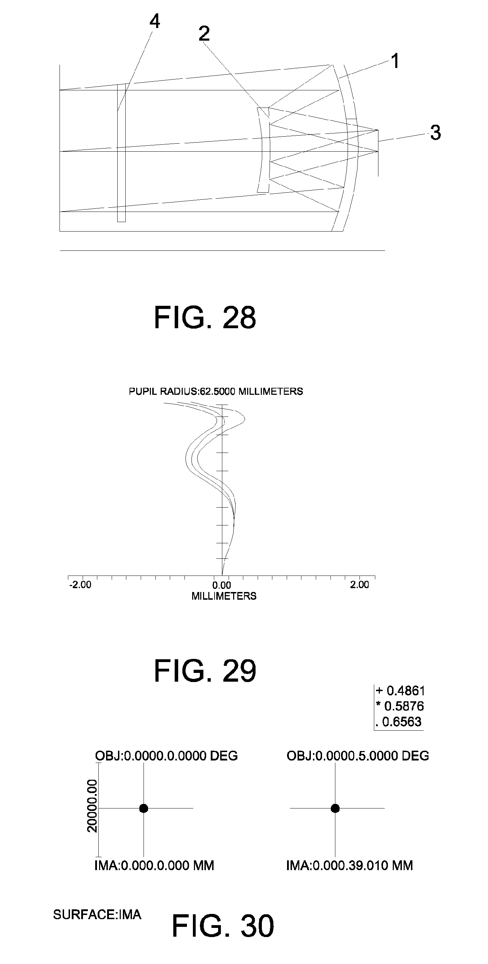

The solar energy collection structure of the invention as shown in figure 28-30 which is mainly comprised of a spherical reflector 1, a small spherical reflector 2, an optical energy collector 3, and a non-spherical calibrating lens 4, whereof the spherical reflector 1 and the small spherical reflector 2 are coated with reflection coating, through the said coating , useful portion of the solar light is reflected to optical energy collector 3. The large and small spherical reflectors 1 & 2 are installed in the solar optical path, whereof the small spherical reflector 2 is installed in front of the spherical reflector 1 while the spherical reflector 1 has a center through hole 11 to let the reflection ray by spherical reflector 2 pass, and an optical energy collector 3 is installed behind the spherical reflector 1 corresponding to the through hole 11 location, thereby to constitute an optical system. Further, a non-spherical calibrating lens 4 is installed at the most front position on the optical path of the optical system, whereof the non-spherical calibrating lens 4 is coated with anti-reflection coating.

The chromatic aberration formed by the optical system of such structure is -0.18, while the maximum spherical aberration is -0.52. Figure 29 shows the curve diagram of the chromatic aberration vs. spherical aberration. Figure 30 shows the point array diagram formed by this optical system.

### Embodying example 11:

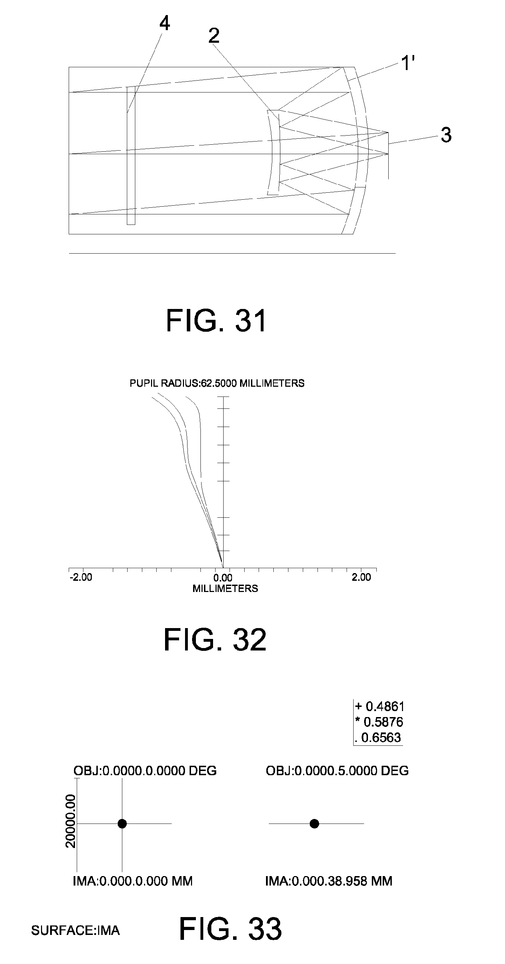

The solar energy collection structure of the invention as shown in figure 31-33 which is mainly comprised of a non-spherical reflector 1', a small spherical reflector 2, an optical energy collector 3, and a non-spherical calibrating lens 4, whereof the non-spherical reflector 1' and the small spherical reflector 2 are coated with reflection coating. The non-spherical reflectors 1' and small spherical reflector 2 are installed in the solar optical path, whereof the small spherical reflector 2 is installed in front of the non-spherical reflector 1' while the non-spherical reflector 1' has a center through hole 11' to let the reflection ray by spherical reflector 2 pass, and an optical energy collector 3 is installed behind the non-spherical reflector 1' corresponding to the through hole 11' location, thereby to constitute an optical system. Further, a non-spherical calibrating lens 4 is installed at the most front position on the optical path of the optical system, whereof the non-spherical calibrating lens 4 is coated with anti-reflection coating.

The chromatic aberration formed by the optical system of such structure is -0.22, while the maximum spherical aberration is -0.038. Figure 32 shows the curve diagram of the chromatic aberration vs. spherical aberration. Figure 33 shows the point array diagram formed by this optical system.

### Embodying example 12:

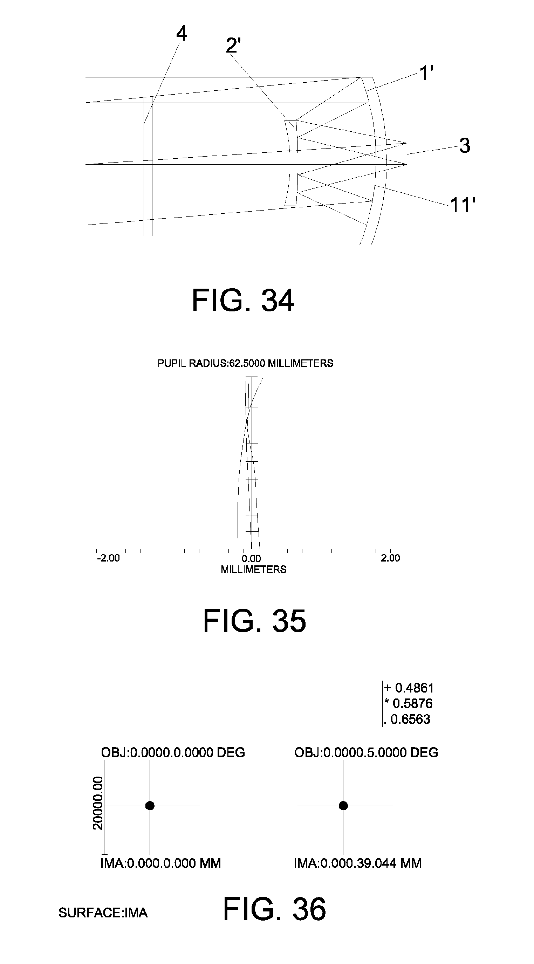

The solar energy collection structure of the invention as shown in figure 34-36 which is mainly comprised of a non-spherical reflector 1', a small non-spherical reflector 2', an optical energy collector 3, and a non-spherical calibrating lens 4, whereof the non-spherical reflector 1' and the small non-spherical reflector 2' are coated with reflection coating. The large and small non-spherical reflectors 1' and 2' are installed in the solar optical path, whereof the small non-spherical reflector 2' is installed in front of the non-spherical reflector 1' while the non-spherical reflector 1' has a center through hole 11' to let the reflection ray by non-spherical reflector 2' pass, and an optical energy collector 3 is installed behind the non-spherical reflector 1' corresponding to the through hole 11' location, thereby to constitute an optical system. Further, a non-spherical calibrating lens 4 is installed at the most front position on the optical path of the optical system, whereof the non-spherical calibrating lens 4 is coated with anti-reflection coating.

The chromatic aberration formed by the optical system of such structure is -0.12, while the maximum spherical aberration is -0.029. Figure 35 shows the curve diagram of the chromatic aberration vs. spherical aberration. Figure 36 shows the point array diagram formed by this optical system.

## Claims

1. A solar energy collection system which is **characterized in that** a spherical reflector is installed in the optical path, whereof the spherical reflector is coated with reflection coating; further, an optical energy collector is installed in the optical path of reflection thereby to constitute an optical system.

2. The solar energy collection system as in claim 1 which is **characterized in that** a non-spherical calibrating lens is further installed in the most front position of the optical system.

3. The solar energy collection system as in claim 2 which is **characterized in that** the non-spherical calibrating lens coated with anti-reflection coating.

4. The solar energy collection system as in claims 1, 2 or 3 which is **characterized in that** the optical energy collector is installed in front of the spherical reflector.

5. The solar energy collection system as in claims 1, 2 or 3 which is **characterized in that** a flat reflector is installed at 45°inclination to the optical axis in front of the spherical reflector and an optical energy collector is installed at the optical path below the flat reflector.

6. A solar energy collection system which is **characterized in that** a non-spherical reflector is installed in the optical path, whereof the non-spherical reflector is coated with reflection coating while an optical energy collector is installed in the optical path of reflection of the non-spherical reflector, thereby to constitute an optical system.

7. The solar energy collection system as in claim 6 which is **characterized in that** a non-spherical calibrating lens is installed at the most front position of the optical system.

8. The solar energy collection system as in claim 7 which is **characterized in that** the non-spherical calibrating lens is coated with anti-reflection coating.

9. The solar energy collection system as in claims 6, 7 or 8 which is **characterized in that** an optical energy collector is installed in front of the spherical reflector.

10. The solar energy collection system as in claims 6, 7 or 8 which is **characterized in that** a flat reflector is installed at 45°inclination to the optical axis in front of the spherical reflector and an optical energy collector is installed at the optical path below the flat reflector.

11. A solar energy collection system which is **characterized in that** two face to face spherical reflectors are installed in the optical path, whereof the two spherical reflectors are coated with reflection coating, whereof the small spherical reflector is installed in front of the spherical reflector while the spherical reflector has a center through hole to let the reflection ray of the small spherical reflector pass and an optical energy collector is installed behind the spherical reflector corresponding to the through hole location, thereby to constitute an optical system.

12. The solar energy collection system as in claim 11 which is **characterized in that** a non-spherical calibrating lens is installed at the most front position on the optical path of the optical system.

13. The solar energy collection system as in claim 12 which is **characterized in that** the non-spherical calibrating lens is coated with anti-reflection coating.

14. A solar energy collection system which is **characterized in that** two face to face non-spherical reflectors are installed in the optical path, whereof the two non-spherical reflectors are coated with reflection coating, whereof the small non-spherical reflector is installed in front of the non-spherical reflector while the non-spherical reflector has a center through hole to let the reflection ray of the small non-spherical reflector pass and an optical energy collector is installed behind the non-spherical reflector corresponding to the through hole location, thereby to constitute an optical system.

15. The solar energy collection system as in claim 14 which is **characterized in that** a non-spherical calibrating lens is installed at the most front position on the optical path of the optical system.

16. The solar energy collection system as in claim 15 which is **characterized in that** the non-spherical calibrating lens is coated with anti-reflection coating.

17. A solar energy collection system which is **characterized in that** two face to face spherical reflector and non-spherical reflector are installed in the optical path, whereof the spherical reflector and the non-spherical reflector are coated with reflection coating, whereof the small spherical reflector or small non-spherical reflector is installed in front of the non-spherical reflector or the spherical reflector while the non-spherical reflector or spherical reflector has a center through hole to let the reflection ray of the small spherical reflector or the non-spherical reflector pass and an optical energy collector is installed behind the non-spherical reflector or the spherical reflector corresponding to the through hole location, thereby to constitute an optical system.

18. The solar energy collection system as in claim 17 which is **characterized in that** a non-spherical calibrating lens is installed at the most front position on the optical path of the optical system.

19. The solar energy collection system as in claim 18 which is **characterized in that** the non-spherical calibrating lens is coated with anti-reflection coating.
